# EUROPÄISCHE PATENTSCHRIFT

(11) **EP 1 330 497 B1**
(45) Veröffentlichungstag und Bekanntmachung des Hinweises auf die Patenterteilung: **02.08.2006**
(21) Anmeldenummer: 01989433.6
(22) Anmeldetag: 31.10.2001
(51) Int. Cl.: C09D 5/02, C09D 7/14

(54) **FARB- UND/ODER EFFEKTGEBENDE PULVERSLURRIES, VERFAHREN ZU IHRER HERSTELLUNG UND MISCHSYSTEM FÜR FARB- UND/ODER EFFEKTGEBENDE PULVERSLURRIES**
COLOUR- AND/OR EFFECT-PRODUCING POWDER SLURRIES, METHOD FOR PRODUCTION THEREOF AND A MIXING SYSTEM FOR COLOUR- AND/OR EFFECT-PRODUCING SLURRIES
SUSPENSIONS PULVERULENTES CHROMOPHORES ET/OU PRODUISANT UN EFFET, PROCEDE DE PRODUCTION ET SYSTEME MELANGEUR POUR SUSPENSIONS PULVERULENTES CHROMOPHORES ET/OU PRODUISANT UN EFFET

(30) Priorität: 31.10.2000 DE 10053931
(43) Veröffentlichungstag der Anmeldung: 30.07.2003
(73) Patentinhaber: BASF Coatings Aktiengesellschaft, 48165 Münster (DE)
(72) Erfinder: WEINTZ, Hans-Joachim, 48308 Senden (DE); WEBER, Dieter, 51491 Overath (DE)
(74) Vertreter: Fitzner, Uwe
(86) Internationale Anmeldenummer: PCT/EP2001/012558
(87) Internationale Veröffentlichungsnummer: WO 2002/036693

(56) Entgegenhaltungen:
- EP-A- 0 614 951
- EP-A- 0 752 455
- WO-A-01/92424
- DE-A- 19 904 330

## Beschreibung

Die vorliegende Erfmdung betrifft neue farb- und/oder effektgebende Pulverslurnes. Außerdem betrifft die vorliegende Erfindung ein neues Verfahren zur Herstellung farb- und/oder effektgebender Pulverslurries. Des weiteren betrifft die vorliegende Erfindung ein neues Mischsystem und Modulsystem für farb- und/oder effektgebende Pulverslurnes. Nicht zuletzt betrifft die vorliegende Erfindung ein neues Verfahren für die nachträgliche Tönung farb- und/oder effektgebender Pulverslurries.

Farb- und/oder effektgebende Pulverslurries, d.h. wäßrige Dispersionen farb- und/oder effektgebender Pulverlacke, sind seit langem bekannt.

So geht aus der japanischen Patentanmeldung JP 53 109 540 A 1 (Derwent-Referat 78800A/44) eine nicht näher spezifierte farb- und/oder effektgebende Pulverslurry für die Herstellung einer farb- und/oder effektgebenden Basislackierung hervor.

Aus der deutschen Offenlegungsschrift DE 27 10 421 A 1 ist eine Metalleffektpigmente enthaltende Pulverslurry auf der Basis von aminneutralisierten Acrylatcopolymerisaten und Melaminharzen oder von Polyestern und Epoxidharzen bekannt. Die bekannte Pulverslurry liefert glatte, glänzende, metallische Beschichtungen.

Aus der japanischen Patentanmeldung JP 02 014 776 A 2 ist eine Mehrschichlackierung aus Basislackierung und Klarlackierung bekannt, deren Basislackierung aus einer farb- und/oder effektgebenden Pulverslurry auf der Basis hydroxygruppenhaltiger Acrylatcopolymerisate und blockierter Polyisocyanate hergestellt wird.

Aus dem amerikanischen Patent US 5,379,947 A sind cosolvensfreie farb- und/oder effektgebende Pulverslurries auf der Basis von beispielsweise hydroxylgruppenhaltigen Acrylatcopolymerisaten und blockierten Polyisocyanaten oder glycidylgruppenhaltigen Acrylatcopolymerisaten und 1,12-Dodecandicarbonsäure bekannt. Die farb- und/oder effektgebenden Pulverslurries können entweder der Herstellung von Primem, d.h. von Füllerlackierungen oder Steinschlagschutzgrundierungen, oder der Herstellung von Basislackierungen dienen.

Aus der WO 01/92424 A1 ist es bekannt, Effektpigmente enthaltende Pulverlackdispersionen herzustellen, indem man einer Pulverslurry die primäre Dispersion eines (Meth)acrylatcopolymerisats in flüssiger Form und/oder in Pulverform zusetzt.

Farb- und/oder effektgebende Pulverslurries weisen wie die entsprechenden Pulverlacke gegenüber den konventionellen oder wäßrigen farb- und/oder effektgebenden Naßlacken den Vorteil der völligen oder nahezu völligen Freiheit von organischen Lösemitteln auf. Gegenüber den Pulverlacken besitzen sie den wesentlichen Vorteil, daß sie wie die Naßlacke gelagert, transportiert und appliziert werden können und keine speziellen Vorrichtungen wie Pulverlacke benötigen.

Nach der Applikation und dem Verdampfen des Wassers liegen sie wie die Pulverlacke in einer dünnen Schicht auf dem Substrat vor und werden aufgeschmolzen, so daß sich eine geschlossene Pulverlackschicht bildet. Die Aushärtung erfolgt bei oder nach dem Aufschmelzen der Pulverschicht. Vorzugsweise liegt die Mindesttemperatur für die Aushärtung oberhalb des Schmelzbereichs des Pulvers, sodaß das Aufschmelzen und die Aushärtung voneinander getrennt sind. Dies hat den Vorteil, daß die Pulverschmelze aufgrund ihrer vergleichsweise niedrigen Viskosität gut verläuft, bevor die Aushärtung einsetzt.

Die bisher bekannten farb- und/oder effektgebenden Pulverslurries und die Verfahren zu ihrer Herstellung haben einen wesentlichen Nachteil, der trotz ihrer vorhandenen technischen Vorteile ihrer breiten Verwendung entgegensteht.

So ist eine Farbtoneinstellung und/oder -korrektur über Misch- oder Tönschritte nicht möglich, sondern der Farbton wird alleine durch die ursprüngliche Einwaage festgelegt. Dies bedeutet, daß die farb- und/oder effektgebenden Pigmente das gesamte Herstellverfahren oder einen Teil hiervon durchlaufen müssen, was zu einer Schädigung der Pigmente führen kann. Oder aber die Pigmente werden in einen Pulverslurryklarlack eingemischt, wodurch sich häufig Probleme der Verteilung der farb- und/oder effektgebenden Pigmente in der Pulverslurry ergeben.

Ob dann die fertige farb- und/oder effektgebende Pulverslurry und die hieraus hergestellte Beschichtung letztlich auch den gewünschten Farbton und/oder optischen Effekt aufweist, ist dann von zahlreichen unterschiedlichen Verfahrensparametern und von der jeweiligen Durchführung der Herstellverfahren abhängig, so daß es ausgesprochen schwierig wird, die Ursache von Fehlchargen zu ermitteln. Es versteht sich von selbst, daß die Pulverslurries, die in ihrer Zusammensetzung und ihrem anwendungstechnischen Eigenschaftsprofil, insbesondere was die Farbtöne und/oder die optischen Effekte betrifft, von den vorgegebenen Spezifikationen abweichen, keine spezifikationsgerechte Beschichtungen liefern können.

Außerdem sind die bisherigen Herstellverfahren unwirtschaftlich, weil eine farb- und/oder effektgebende Pulverslurry eines bestimmten Farbtons und/oder optischen Effekts in einer vergleichsweise großen Menge hergestellt werden muß, selbst wenn nur geringe Mengen davon benötigt werden.

Mischsysteme für wäßrige Beschichtungsstoffe (Naßlacke) sind aus den Patentanmeldungen DE 41 10 520 A 1, EP 0 471 972 A 1, EP 0 578 645 A 1, EP 0 614 951 A 1 oder EP 0 698 773 A 1 bekannt.

Sie gestatten die bedarfsgerechte Herstellung wäßriger Beschichtungsstoffe in genau abstimmbaren Farbtönen und optischen Effekten. Diese bekannten Mischsysteme enthalten im wesentlichen wasserfreie farb- und/oder effektgebende Basisfarben und mindestens einen wäßrigen pigmentfreien Mischlack. Diese Mischsysteme und die hieraus hergestellten Beschichtungsstoffe erfüllen aufgrund ihrer Variationsfähigkeit im wesentlichen die stetig steigenden Anforderungen des Marktes. Diese bekannten Mischsysteme haben sich deshalb in der Form von Modulsystemen insbesondere in der Autoreparaturlackierung durchsetzen können, wo sie zur Herstellung von Kleinmengen von farb- und/oder effektgebenden Beschichtungsstoffen eingesetzt werden. Um das Potential dieser Modulsysteme effektiv zu nutzen, werden die stofflichen Zusammensetzungen der farb- und/oder effektgebenden Beschichtungsstoffe mit Hilfe eines Farbmischformel-Systems ermittelt.

Farb- und/oder effektgebende Pulverslurries sind jedoch bisher im Rahmen solcher Modulsysteme nicht eingesetzt worden.

Im Rahmen der vorliegenden Erfindung bezeichnet der Begriff "Modul" ein standardisiertes gebrauchsfertiges Handelsprodukt, dessen anwendungstechnisches Eigenschaftsprofil den Eigenschaftsprofilen der anderen Module genau angepaßt ist und diese ergänzt, so daß die Module insgesamt zu einem Modulsystem kombiniert werden können.

Aufgabe der vorliegenden Erfindung ist es, neue farb- und/oder effektgebende Pulverslurries bereitzustellen, die die Nachteile des Standes der Technik nicht mehr länger aufweisen, sondern deren Zusammensetzung und technisches Eigenschaftsprofil, insbesondere was die Farbtöne und/oder die optischen Effekte betrifft, den jeweiligen vorgegebenen Spezifikationen genau entsprechen. Dabei soll das farb- und/oder effektgebende Potential der Pigmente in den aus den neuen Pulverslurries hergestellten Beschichtungen in vollem Umfang genutzt werden. Außerdem sollen die neuen Pulverslurries in einfacher Weise herstellbar sein.

Außerdem lag der vorliegenden Erfuidung die Aufgabe zugrunde, ein neues Verfahren zur Herstellung von farb- und/oder effektgebenden Pulverslurries zu finden, das die Nachteile des Standes der Technik nicht mehr länger aufweist, sondern das es ohne großen Aufwand gestattet, Pulverslunies unterschiedlicher Farbtöne und/oder optischer Effekte herzustellen, wobei die farb- und/oder effektgebenden Pulverslurries stets in vollem Umfang die vorgegebenen Spezifikation erfüllen. Außerdem soll es das neue Verfahren ennöglichen, einmal hergestellte farb- und/oder effektgebende Pulverslurries, die von den vorgegebenen Spezifikationen abweichen, nachträglich spezifikationsgerecht einzustellen, so daß nur noch wenige oder gar keine Fehlchal-gen auftreten.

Desweiteren war es die Aufgabe der vorliegenden Erfindung, ein neues Mischsystem für Pulverslurries zu finden, das nicht nur die Herstellung von farb- und/oder effektgebenden Pulverslurries, sondern auch die nachträgliche Einstellung ihrer Farbtöne und/oder ihrer optischen Effekte gestattet.

Nicht zuletzt war es die Aufgabe der vorliegenden Erfmdung, ein neues Modulsystem für farb- und/oder effektgebende Pulverslurries zu finden, daß die Herstellung von farb- und/oder effektgebenden Pulverslurnes sowie die nachträgliche Einstellung ihrer Farbtöne und/oder ihrer optischen Effekte anhand eines Farbmischformel-Systems gestattet

Demgemäß wurden die neuen farb- und/oder effektgebenden Pulverslurries gefunden, die herstellbar sind, indem man
(A) einen Pulverslurryklarlack mit
(B) mindestens einer farb- und/oder effektgebenden Pulverslurry,
oder alternativ
(A) eine farb- und/oder effektgebende Pulverslurry mit
(B) mindestens einer farb- und/oder effektgebenden Pulverslurry, die einen anderen Farbton und/oder optischen Effekt als die, Pulverslurry (A) aufweist,
vermischt.

Im folgenden werden die neuen farb- und/oder effektgebenden Pulverslurnes als "erfindungsgemäße Pulverslurries" bezeichnet.

Außerdem wurde das neue Verfahren zur Herstellung von farb- und/oder effektgebenden Pulverslunies gefunden, bei dem man
(A) einen Pulversiuiryklarlack mit
(B) mindestens einer farb- und/oder effektgebenden Pulverslurry,
oder alternativ
(A) eine farb- und/oder effektgebende Pulverslurry mit
(B) mindestens einer farb- und/oder effektgebenden Pulverslurry, die einen anderen Farbton und/oder optischen Effekt als die Pulverslurry (A) aufweist,
vermischt.

Im folgenden wird das neue Verfahren zur Herstellung farb- und/oder effektgebender Pulverslurries als "enfindungsgemäßes Herstellverfahren" bezeichnet.

Außerdem wurde das neue Verfahren zur nachträglichen Einstellung der Farbtöne und/oder der optischen Effekte von farb- und/oder effektgebenden Pulverslurries gefunden, bei dem man
(A) eine farb- und/oder effektgebende Pulverslurry mit
(B) mindestens einer farb- und/oder effektgebenden Pulverslurry, die einen anderen Farbton und/oder optischen Effekt als die Pulverslurry (A) aufweist,
vermischt.

Im folgenden wird das neue Verfahren zur nachträglichen Einstellung der Farbtöne und/oder der optischen Effekte von farb- und/oder effektgebenden Pulverslurries als "erfindungsgemäßes Tönverfahren"bezeichnet.

Femer wurde das neue Mischsystem zur Herstellung von farb- und/oder effektgebenden Pulverslurries und/oder zur nachträglichen Einstellung ihrer Farbtöne und/oder ihrer optischen Effekte gefunden, das
(A) eine farb- und/oder effektgebende Pulverslurry und
(B) mindestens eine weitere farb- und/oder effektgebende Pulverslurry, die einen anderen Farbton und/oder optischen Effekt als die Pulverslurry (A) aufweist,
umfaßt und das im folgenden als "erfindungsgemäßes Mischsystem" bezeichnet wird.

Nicht zuletzt wurde das neue Modulsystem zur Herstellung von farb- und/oder effektgebenden Pulverslurries und/oder zur nachträglichen Einstellung ihrer Farbtöne und/oder ihrer optischen Effekte gefunden, das
(I) einen Effektmodul, enthaltend eine farb- und/oder effektgebende Pulverslurry (A), und
(II) mindestens einen weiteren Effektmodul, enthaltend eine farb- und/oder effektgebende Pulverslurry (B), die einen anderen Farbton und/oder optischen Effekt als die Pulverslurry (A) aufweist, sowie
(III) ein Farbmischformel-System (C)
umfaßt und das im folgenden als "erfindungsgemäßes Modulsystem" bezeichnet wird.

Die erfindungsgemäßen Pulverslurries sind herstellbar, indem man einen Pulverslurryklarlack (A) mit mindestens einer farb- und/oder effektgebenden Pulverslurry vermischt. Oder aber es wird eine farb- und/oder effektgebende Pulverslurry (A) mit mindestens einer farb- und/oder effektgebenden Pulverslurry (B), die einen anderen Farbton und/oder optischen Effekt als die Pulverslurry (A) aufweist, vermischt. Vorzugsweise wird die zweite Variante, bei der farb- und/oder effektgebende Pulverslurries (A) und (B) miteinander vermischt werden, angewandt.

Bei den optischen Effekten handelt es sich insbesondere um Metallic-Effekte und/oder dichroitische optische Effekte (vgl. Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«).

Der Pulverslurryklarlack (A), die farb- und/oder effektgebende Pulverslurry (A) und die farb- und/oder effektgebenden Pulverslurry (B) sind thermisch und/oder mit aktinischer Strahlung härtbar.

Sind Sie thermisch härtbar, können sie thermisch fiemdvernetzend oder selbstvernetzend, insbesondere fremdvernetzend, sein. Im Rahmen der vorliegenden Erfindung bezeichnet der Begriff "selbstvernetzend" die Eigenschaft eines Bindemittels mit sich selbst Vernetzungsreaktionen einzugehen. Voraussetzung hierfür ist, daß in den Bindemitteln bereits beide Arten von komplementären reaktiven funktionellen Gruppen enthaltend sind, die für eine Vernetzung notwendig sind, oder reaktive funktionelle Gruppen, die "mit sich selbst" reagieren können. Als fremdverntzend werden dagegen solche erfindungsgemäße Pulverslurries bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Im Rahmen der vorliegenden Erfindung ist unter aktinischer Strahlung elektromagnetische Strahlung wie nahes Infrarot, sichtbares Licht, UV-Strahlung oder Röntgenstrahlung, insbesondere UV-Strahlung, oder Korpuskularstrahlung wie Elektronenstrahlung zu verstehen.

Werden die thermische Härtung und die Härtung mit aktinischer Strahlung zugleich angewandt, spricht man auch von Dual-Cure und Dual-Cure-Pulverslurries.

Bei der Herstellung der thermisch härtbaren erfindungsgemäßen Pulverslurries werden vorzugsweise
- ein thermisch härtbarer Pulverslurryklarlack (A) mit mindestens einer thermisch härtbaren farb- und/oder effektgebenden Pulverslurry (B) oder alternativ
- eine thermisch härtbare farb- und/oder effektgebende Pulverslurry (A) mit mindestens einer thermisch härtbaren farb- und/oder effektgebenden Pulverslurry (B)
vermischt.

Bei der Herstellung der mit aktinischer Strahlung härtbaren erfindungsgemäßen Pulverslurries werden vorzugsweise
- ein mit aktinischer Strahlung härtbarer Pulverslurryklarlack (A) mit mindestens einer mit aktinischer Strahlung härtbaren farb- und/oder effektgebenden Pulverslurry (B) oder alternativ
- eine mit aktinischer Strahlung härtbare farb- und/oder effektgebende Pulversluny (A) mit mindestens einer mit aktinischer Strahlung härtbaren farb- und/oder effektgebenden Pulverslurry (B)
vermischt.

Bei der Herstellung der erfindungsgemäßen Dual-Cure-Pulverslurries werden vorzugsweise
- ein mit aktinischer Strahlung härtbarer Pulverslurryklarlack (A) mit mindestens einer thermisch härtbaren farb- und/oder effektgebenden Pulverslurry (B),
- ein mit aktinischer Strahlung härtbarer Pulverslurryklarlack (A) mit mindestens einer farb- und/oder effektgebenden Dual-Cure-Pulverslurry (B),
- ein thermisch härtbarer Pulverslurryklarlack (A) mit mindestens einer mit aktinischer Strahlung härtbaren farb- und/oder effektgebenden Pulverslurry (B),
- ein thermisch härtbarer Pulverslurryklarlack (A) mit mindestens einer farb- und/oder effektgebenden Dual-Cure-Pulverslurry (B),
- ein Dual-Cure-Pulverslunyklarlack (A) mit mindestens einer thermisch härtbaren farb- und/oder effektgebenden Pulverslurry (B),
- ein Dual-Cure-Pulverslurryklarlack (A) mit mindestens einer mit aktinischer Strahlung härtbaren farb- und/oder effektgebenden Pulverslurry (B) oder
- ein Dual-Cure-Pulverslurryklarlack (A) mit mindestens einer farb- und/oder effektgebenden Dual-Cure-Pulverslurry (B),
oder alternativ
- eine mit aktinischer Strahlung härtbare Pulverslurry (A) mit mindestens einer thermisch härtbaren farb- und/oder effektgebenden Pulverslurry (B),
- eine mit aktinischer Strahlung härtbare Pulverslurry (A) mit mindestens einer farb- und/oder effektgebenden Dual-Cure-Pulverslurry (B),
- eine thermisch härtbare Pulverslurry (A) mit mindestens einer mit aktinischer Strahlung härtbaren farb- und/oder effektgebenden Pulverslurry (B),
- eine thermisch härtbare Pulverslurry (A) mit mindestens einer farb- und/oder effektgebenden Dual-Cure-Pulverslurry (B),
- eine Dual-Cure-Pulverslurry (A) mit mindestens einer thermisch härtbaren farb- und/oder effektgebenden Pulverslurry (B),
- eine Dual-Cure-Pulverslurry (A) mit mindestens einer mit aktinischer Strahlung härtbaren farb- und/oder effektgebenden Pulverslurry (B) oder
- eine Dual-Cure-Pulverslurry (A) mit mindestens einer farb- und/oder effektgebenden Dual-Cure-Pulverslurry (B)
vermischt.

Erfindungsgemäß ist es hierbei von Vorteil, wenn die Pulverslurryklarlacke (A) und die farb- und/oder effektgebenden Pulverslurries (A) und (B) bis auf die farb- und/oder effektgebenden Pigmente die gleichen Bestandteile, insbesondere die gleichen Bindemittel, enthalten.

Von den vorstehend aufgeführten erf'mdungsgemäßen Pulverslurries und Varianten des erfindungsgemäßen Herstellverfahrens sind diejenigen von Vorteil, bei denen farb- und/oder effektgebende Pulverslurries (A) mit mindestens einer farb- und/oder effektgebenden Pulverslurry (B) vermischt werden.

Die vorstehend aufgeführten bevorzugten Varianten des erfindungsgemäßen Herstellverfahrens werden auch im Rahmen des erfindungsgemäßen Tönverfahrens, vorzugsweise mit Hilfe des erfindungsgemäßen Mischsystems und des erfindungsgemäßen Modulsystems eingesetzt. Zu diesem Zweck werden das erfindungsgemäße Mischsystem und das erfindungsgemäße Modulsystem mit den entsprechenden geeigneten Pulverklarlacken oder farb- und/oder effektgebenden Pulverslurries (A) sowie den entsprechenden geeigneten farb- und/oder effektgebenden Pulverslurries (B) ausgerüstet.

Die erfindungsgemäß zu verwendenden farb- und/oder oder effektgebenden Pulverslurries (A) und (B) enthalten mindestens einen feinteiligen dimensionsstabilen Bestandteil, d.h. einen Pulverlack, als disperse Phase und ein wäßriges Medium als kontinuierliche Phase. Gleiches gilt für die erfindungsgemäß zu verwendenden Pulverklarlacke (A); diese enthalten lediglich keine deckenden farb- und/oder effektgebenden Pigmente und Füllstoffe. Somit gilt das nachstehend für die farb- und/oder effektgebenden Pulverslurries (A) und (B) Gesagte für die Pulverslurryklarlacke (A) sinngemäß.

Der feinteilige, dimensionsstabile Bestandteil oder Pulverlack der farb- und/oder effektgebenden Pulverslurry kann fest und/oder hochviskos sein. Im Rahmen der vorliegenden Erfindung bedeutet "hochviskos"; daß sich die Teilchen unter den üblichen und bekannten Bedingungen der Herstellung, der Lagerung und der Anwendung von Pulverslurries im wesentlichen wie feste Teilchen verhalten. Vorzugsweise ist der Pulverlack fest.

Die einzelnen Teilchen des feinteiligen Bestandteils sind außerdem dimensionsstabil. Im Rahmen der vorliegenden Erfindung bedeutet "dimensionsstabil", daß die Teilchen unter den üblichen und bekannten Bedingungen der Lagerung und der Anwendung von Pulverslurries, wenn überhaupt, nur geringfügig agglomerieren und/oder in kleinere Teilchen zerfallen, sondern auch unter dem Einfluß von Scherkräften im wesentlichen ihre ursprünglichen Form bewahren.

Vorzugsweise liegt der Festkörpergehalt der farb- und/oder effektgebenden Pulverslurry bei 10 bis 80, bevorzugt 15 bis 75, besonders bevorzugt 20 bis 70, ganz besonders bevorzugt 25 bis 70 und insbesondere 30 bis 65 Gew.-%, jeweils bezogen auf die farb- und/oder effektgebende Pulverslurry.

Vorzugsweise liegt die mittlere Teilchengröße der feinteiligen, dimensionsstabilen Bestandteile der farb- und/oder effektgebenden Pulverslurry bei 0,8 bis 40 µm, bevorzugt 0,8 bis 20 µm, und besonders bevorzugt bei 2 bis 6 µm. Unter mittlerer Teilchengröße wird der nach der Laserbeugungsmethode ermittelte 50%-Medianwert verstanden, d.h., 50% der Teilchen haben einen Teilchendurchmesser ≤ dem Medianwert und 50% der Teilchen einen Teilchendurchmesser > dem Medianwert.

Die Teilchengröße findet ihre obere Begrenzung dann, wenn die Teilchen aufgrund ihrer Größe beim Einbrennen nicht mehr vollständig verlaufen können und damit der Filmverlauf negativ beeinflußt wird. Als Obergrenze werden 40 µm für sinnvoll erachtet, da ab dieser Teilchengröße mit einer Verstopfung der Spülkanäle der hochempfindlichen Applikationsapparaturen zu rechnen ist.

Die farb- und/oder effektgebende Pulverslurry ist vorzugsweise frei von organischen Lösemitteln (Cosolventien). Im Rahmen der vorliegenden Erfindung bedeutet dies, daß sie einen Restgehalt an flüchtigen Lösemitteln von < 1 Gew.-%, bevorzugt < 0,5 Gew.-% und besonders bevorzugt < 0,2 Gew.-% hat. Erfindungsgemäß ist es von ganz besonderem Vorteil, wenn der Restgehalt unterhalb der gaschromatographischen Nachweisgrenze liegt.

In einer ersten Ausführungsform, die erfindungsgemäß bevorzugt ist, enthält der feinteilige, dimensionsstabile Bestandteil der farb- und/oder effektgebenden Pulverslurry mindestens ein farbgebendes und/oder effektgebendes Pigment; d.h., die Gesamtmenge der eingesetzten Pigmente befinden sich in den dispergierten Pulverlackteilchen.

In einer zweiten Ausführungsform, die erfindungsgemäß bevorzugt ist, enthält die farb- und/oder effektgebende Pulverslurry mindestens einen pigmentfreien feinverleilten Bestandteil bzw. Pulverlack und mindestens ein pulverförmiges, farbgebendes und/oder effektgebendes Pigment; d.h. alle Pigmente liegen als separate feste Phase vor. Für deren Teilchengröße gilt das vorstehend Gesagte sinngemäß.

In einer dritten Ausführungsform, die erfindungsgemäß bevorzugt ist, enthält die farb- und/oder effektgebende Pulverslurry mindestens einen dispergierten Pulverlack, der einen Teil der eingesetzen Pigmente enthält, wogegen der andere Teil der Pigmente als separate feste Phase vorliegt. Hierbei kann es sich bei dem in den Pulverlackteilchen vorliegenden Anteil um die Hauptmenge, d.h. um mehr als 50% der eingesetzten Pigmente handeln. Es könnnen sich indes auch weniger als 50% in den Pulverlackteilchen befinden. Hinsichtlich der Teilchengrößen gilt das vorstehend Gesagte auch hier sinngemäß.

Welcher Variante der erfindungsgemäß zu verwendenden farb- und/oder effektgebenden Pulverslurry der Vorzug gegeben wird, richtet sich insbesondere nach der Natur der Pigmente und/oder nach dem Verfahren, mit dem die jeweils verwendete farb- und/oder effektgebende Pulverslurry hergestellt wird. In den meisten Fällen bietet die erste bevorzugte AusKhrungsform bsondere Vorteile, weswegen sie erfindungsgemäß besonders bevorzugt ist.

Die Pigmente können aus anorganischen oder organischen Verbindungen bestehen. Die erfindungsgemäß zu verwendende farb- und/oder effektgebende Pulverslurry gewährleistet daher aufgrund dieser Vielzahl geeigneter Pigmente eine universelle Einsatzbreite und ermöglicht die Realisierung einer Vielzahl von Farbtönen und optischen Effekten.

Beispiele geeigneter Effektpigmente sind Metallplättchenpigmente wie handelsübliche Aluminiumbronzen, gemäß DE 36 36 183 A 1 chromatierte Aluminiumbronzen, und handelsübliche Edelstahlbronzen sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A 1, DE 37 18 446 A 1,DE 37 19 804 A 1,DE 39 30 601 A 1,EP 00 68 311 A 1, EP 0 264 843 A 1, EP 0 265 820 A 1, EP 0 283 852 A 1, EP 0 293 746 A 1, EP 0 417 567 A 1, US 4,828,826 A oder US 5,244,649 A verwiesen.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Cbromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cad.miumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998,' Seiten 180 und 181, »Eisenblau-Pigmente« bis »Eisenoxidschwarz«, Seiten 451 1 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »AzomethinPigmente«, »Azopigmente«, und Seite 379, »Metallkomplex-Pigmente«, verwiesen.

Die farb- und/oder effektgebende Pulverslurry kann außerdem noch organische und anorganische Füllstoffe enthalten, die wie die Pigmente innerhalb und außerhalb der dispergierten Pulverlackteilchen vorliegen können; das bei den Pigmenten Gesagte gilt hier sinngemäß.

Beispiele geeigneter organischer und anorganischer Füllstoffe sind Kreide, Calciumsulfate, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern, Polyacrylnitrilpulver, Polyamidpulver oder Holzmehl. Ergänzend wird auf Römpp Lexikon Lacke und Druckfarben, Georg Thieme Verlag, 1998, Seiten 250 ff., »Füllstoffe«, verwiesen. Weitere Beispiele geeigneter Füllstoffe sind aus der deutschen Patentanmeldung DE 196 06 706 A 1, Spalte 8, Zeilen 30 bis 64, bekannt. Vorzugsweise werden sie in den dort angegebenen Mengen eingesetzt.

Die Pigmente und Füllstoffe können auch in ultrafeiner, nicht deckender Form vorliegen.

Der Anteil der Pigmente, inklusive der Füllstoffe, an den erfindungsgemäß zu verwendenden farb- und/oder effektgebenden Pulverslurries kann sehr breit variieren und richtet sich nach den Erfordernissen des Einzelfalls, insbesondere nach dem einzustellenden optischen Effekt und/oder dem Deckvermögen der jeweils verwendeten Pigmente. Vorzugsweise liegt der Gehalt an Pigmenten bei 0,5 bis 80, bevorzugt 0,8 bis 75, besonders bevorzugt 1,0 bis 70, ganz besonders bevorzugt 1,2 bis 65 und insbesondere 1,3 bis 60 Gew.-%, jeweils bezogen auf den Festkörper der farb- und/oder effektgebenden Pulversluny.

Die erfindungsgemäß zu verwendende farb- und/oder effektgebende Pulverslurry kann zusätzlich zu den vorstehend beschriebenen Pigmenten molekulardispers verteilte organische Farbstoffe enthalten.

Diese molekulardispers verteilten Farbstoffe können dabei entweder in den dispergierten Pulverlackteilchen oder in der kontinuierlichen Phase der erfindungsgemäß zu verwendenden farb- und/oder effektgebenden Pulverslurry vorhanden sein.

Sie können indes auch in den dispergierten Pulverlackteilchen oder in der kontinuierlichen Phase vorliegen. Hierbei kann es sich bei dem in den Pulverlackteilchen vorliegenden Anteil um die Hauptrnenge, d.h. um mehr als 50% der eingesetzten organischen Farbstoffe handeln. Es könnnen sich indes auch weniger als 50% in den Pulverlackteilchen befinden. Die Verteilung der organischen Farbstoffe zwischen den Phasen kann dem thermodynamischen Gleichgewicht entsprechen, das aus der Löslichkeit der organischen Farbstoffe in den Phasen resultiert. Die Verteilung kann aber auch weit von dem thermodynamischen Gleichgewicht entfernt liegen.

Geeignet sind alle organischen Farbstoffe, die in der erfindungsgemäß zu verwendenden farb- und/oder effektgebenden Pulverslurry im vorstehend geschilderten Sinne löslich sind. Gut geeignet sind lichtechte organische Farbstoffe. Besonders gut geeignet sind lichtechte organische Farbstoffe mit einer geringen oder nicht vorhandenen Neigung zur Migration aus den Beschichtungen, die aus den erfindungsgemäßen Pulverslurries hergestellt werden. Die Migrationsneigung kann der Fachmann anhand seines allgemeinen Fachwissens abschätzen und/oder mit Hilfe einfacher orientierender Vorversuche beispielsweise im Rahmen von Tönversuchen ermitteln.

Der Gehalt der farb- und/oder effektgebenden Pulverslurry an den molekulardispers verteilten organischen Farbstoffen kann außerordentlich breit variieren und richtet sich in erster Linie nach der Farbe und dem Buntton, der eingestellt werden soll, sowie nach der Menge der vorhandenen Pigmente und/oder Füllstoffe.

Der Pulverlack enthält als wesentlichen Bestandteil mindestens ein Bindemittel.

Die Bindemittel sind oligomere und polymere Harze. Unter Oligomeren werden Harze verstanden, die mindestens 2 bis 15 Monomereinheiten in ihrem Molekül enthalten. Im Rahmen der vorliegenden Erfindung werden unter Polymeren Harze verstanden, die mindestens 10 wiederkehrende Monomereinheiten in ihrem Molekül enthalten. Ergänzend wird zu diesen Begriffen auf Römpp Lexikon Lacke und Druckfarben, Georg Thieme Verlag, Stuttgart, New York, 1998, »Oligomere«, Seite 425, verwiesen.

Erfindungsgemäß ist es von Vorteil, wenn die Mindestfilmbildetemperatur der Bindemittel mindestens 0 °C, bevorzugt mindestens 10, besonders bevorzugt mindestens 15, ganz besonders bevorzugt mindestens 20 und insbesondere mindestens 25 °C beträgt. Die Mindestfilmbildetemperatur kann ermittelt werden, indem die wäßrige Dispersion des Bindemittels mittels einer Rakel auf eine Glasplatte aufgezogen und auf einem Gradientenofen erwärmt wird. Die Temperatur, bei der die pulverförmige Schicht verfilmt, wird als Mindestfilmbildetemperatur bezeichnet. Ergänzend wird auf Römpp Lexikon Lacke und Druckfarben, Georg Thieme Verlag, Stuttgart, New York, 1998 »Mindestfilmbildetemperatur«, Seite 391, verwiesen.

Beispiele für geeignete Bindemittel sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, "Bindemittel", verwiesen.

Beispiele geeigneter (Co)Polymerisate sind (Meth)Acrylat(co)polymerisate oder partiell verseifte Polyvinylester, insbesondere (Meth)Acrylatcopolymerisate.

Beispiele geeigneter Polyadditionsharze und/oder Polykondensationsharze sind Polyester, Alkyde, Polyurethane, Polylactone, Polycarbonate, Polyether, Epoxidharze, Epoxidharz-Amin-Addukte, Polyhamstoffe, Polyamide, Polyimide, Polyester-Polyurethane, Polyether-Polyurethane oder Polyester-Polyether-Polyurethane, insbesondere Epoxidharze.

Die selbstvemetzenden Bindemittel der thermisch härtbaren Pulverlacke und der Dual-Cure-Pulverlacke enthalten reaktive funktionelle Gruppen, die mit Gruppen ihrer Art oder mit komplementären reaktiven funktionellen Gruppen Vernetzungsreaktionen eingehen können. Die fremdvernetzenden Bindemittel enthalten reaktive funktionelle Gruppen, die mit komplementären reaktiven funktionellen Gruppen, die in Vernetzungsmitteln vorliegen, Vernetzungsreaktionen eingehen können. Beispiele geeigneter erfindungsgemäß zu verwendender komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R und R" stehen für gleiche oder verschiedene aliphatische Reste oder sind miteinander zu einem aliphatischen oder heteroaliphatischen Ring verknüpft.

### Übersicht: Beispiele komplementärer funktioneller Gruppen

| **Bindemittel und Vernetzungsmittel** | |
|---|---|
| **oder** | |
| **Vernetzungsmittel und Bindemittel** | |
| -SH | -C(O)-OH |
| NH₂ | -C(O)-O-C(O)- |
| -OH | -NCO |
| -O-(CO)-NH-(CO)-NH₂ | -NH-C(O)-OR |
| -O-(CO)-NH₂ | -CH₂-OH |
| >NH | -CH₂-O-R |
| | -NH-CH₂-O-R |
| | -NH-CH₂-OH |
| | -N(-CH₂-O-R)₂ |
| | -NH-C(O)-CH(-C(O)OR)₂ |
| | -NH-C(O)-CH(-C(O)OR)(-C(O)-R) |
| | -NH-C(O)-NR' R" |
| | > Si(OR)₂ |
| | 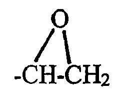 |
| | 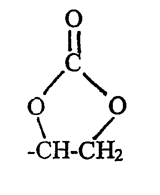 |
| -C(O)-OH | 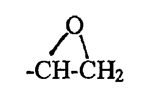 |
| | -C(O)-N(CH₂-CH₂-OH)₂ |

Die Auswahl der jeweiligen komplementären Gruppen richtet sich zum einen danach, daß sie bei der Herstellung, der Lagerung, der Applikation und dem Aufschmelzen der erfindungsgemäßen Pulverslurries keine unerwünschten Reaktionen, insbesondere keine vorzeitige Vernetzung, eingehen und/oder gegebenenfalls die Härtung mit aktinischer Strahlung nicht stören oder inhibieren dürfen, und zum anderen danach, in welchem Temperaturbereich die Vernetzung stattfmden soll.

Vorzugsweise werden bei den erfindungsgemäßen Pulverslurries Vernetzungstemperaturen von 60 bis 180°C angewandt. Es werden daher vorzugsweise Bindemittel mit Thio-, Hydroxyl-, N-Methylolamino- N-Alkoxymethylamino-, Imino-, Carbamat-, Allophanat-, Epoxy- oder Carboxylgruppen, bevorzugt Hydroxyl- oder Epoxidgruppen, insbesondere Epoxidgruppen, einerseits und vorzugsweise Vernetzungsmittel mit Anhydrid-, Carboxyl-, Epoxid-, blockierten lsocyanat-, Urethan-, Methylol-, Methylolether-, Siloxan-, Carbonat-, Amino-, Hydroxy- und/oder beta-Hydroxyalkylamidgruppen, bevorzugt Epoxid-, Hydroxy-, beta-Hydroxyalkylamid-, blockierte und unblockierte Isocyanat-, Urethan- oder Alkoxymethylaminogruppen, besonders bevorzugt - Epoxid- oder Hydroxylgruppen, insbesondere phenolische Hydroxylgruppen, andererseits angewandt.

Im Falle selbstvernetzender farb- und/oder effektgebender Pulverslurries enthalten die Bindemittel insbesondere Methylol-, Methylolether- und/oder N-Alkoxymethylaminogruppen.

Komplementäre reaktive funktionelle Gruppen, die für die Verwendung in den erfindungsgemäß zu verwendenden farb- und/oder effektgebenden Pulverslurries besonders gut geeignet sind, sind
- Carboxylgruppen einerseits und Epoxidgruppen und/oder beta-Hydroxyalkylamidgruppen andererseits,
- Hydroxylgruppen einerseits und blockierte Isocyanat-, Urethan- oder Alkoxymethylaminogruppen andererseits sowie
- Epoxidgruppen einerseits und phenolische Hydroxylgruppen andererseits.

Die Funktionalität der Bindemittel bezüglich der vorstehend beschriebenen reaktiven funktionellen Gruppen kann sehr breit variieren und richtet sich insbesondere nach der Vernetzungsdichte, die man erzielen will, und/oder nach der Funktionalität der jeweils angewandten Vernetzungsmittel. Beispielsweise liegt im Falle carboxylgruppenhaltiger Bindemittel die Säurezahl vorzugsweise bei 10 bis 100, bevorzugt 15 bis 80, besonders bevorzugt 20 bis 75, ganz besonders bevorzugt 25 bis 70 und insbesondere 30 bis 65 mg KOH/g. Oder im Falle hydroxylgruppenhaltiger Bindemittel liegt die OH-Zahl vorzugsweise bei 15 bis 300, bevorzugt 20 bis 250, besonders bevorzugz 25 bis 200, ganz besonders bevorzugt 30 bis 150 und insbesondere 35 bis 120 mg KOH/g. Oder im Falle epoxidgruppenhaltiger Bindemittel liegt das Epoxidäquivalentgewicht vorzugsweise bei 400 bis 2.500, bevorzugt 420 bis 2.200, besonders bevorzugt 430 bis 2.100, ganz besonders bevorzugt 440 bis 2.000 und indesondere 440 bis 1.900.

Die vorstehend beschreibenen komplementären reaktiven funktionellen Gruppen können nach den üblichen und bekannten Methoden der Polymerchemie in die Bindemittel eingebaut werden. Dies kann beispielsweise durch den Einbau von Monomeren, die die entsprechenden reaktiven funktionellen Gruppen tragen, und/oder mit Hilfe polymeranaloger Reaktionen geschehen.

Beispiele geeigneter olefinisch ungesättigter Monomere mit reaktiven funktionellen Gruppen sind
a1) Monomere, welche mindestens eine Hydroxyl-, Amino-, Alkoxymethylamino-, Carbamat-, Allophanat- oder Iminogruppe pro Molekül tragen wie
   - Hydroxyalkylester der Acrylsäure, Methacrylsäure oder einer anderen alpha,beta-olefmisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; oder Hydroxycycloalkylester wie 1,4-Bis(hydroxymethyl)cyclohexan-, Octahydro-4,7-methano-1 H-inden-dimethanol- oder Methylpropandiolmonoacrylat, -monomethacrylat, -monoethacrylat, -monocrotonat, -monomaleinat, -monofumarat oder -monoitaconat; Umsetzungsprodukte aus cyclischen Estern, wie z.B. epsilon-Caprolacton und diesen Hydroxyalkyl- oder -cycloalkylestem;
   - olefinisch ungesättigte Alkohole wie Allylalkohol;
   - Polyole wie Trimethylolpropanmono- oder diallylether oder Pentaerytlu-itmono-, -di- oder triallylether;
   - Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomenje Molekül, insbesondere einer Versatic®-Säure, umgesetzt wird;
   - Aminoethylacrylat, Aminoethylmethacrylat, Allylamin oder N-Methyliminoethylacrylat;
   - N,N-Di(methoxymethyl)aminoethylacrylat oder -methacrylat oder N,N-Di(butoxymethyl)aminopropylacrylat oder -methacrylat;
   - (Meth)Acrylsäureamide wie (Meth)Acrylsäureamid, N-Methyl-, N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid;
   - Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US-A-3,479,328, US-A-3,674,838, US-A-4,126,747, US-A- 4,279,833 oder US-A-4,340,497 beschrieben;
a2) Monomere, welche mindestens eine Säuregruppe pro Molekül tragen, wie
   - Acrylsäure, Methacrylsäure, Ethacrylsäure, Crotonsäure, Maleinsäure, Fumarsäure oder Itaconsäure;
   - olefinisch ungesättigte Sulfon- oder Phosphonsäuren oder deren Teilester;
   - Maleinsäuremono(meth)acryloyloxyethylester, Bernsteinsäuremono(meth)acryloyloxyethylester oder Phthalsäuremono(meth)acryloyloxyethylester; oder
   - Vinylbenzoesäure (alle Isomere), alpha-Methylvinylbenzoesäure (alle Isomere) oder Vinylbenzsolsulfonsäure (alle Isomere).
a3) Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.

Sie werden vorzugsweise zur Herstellung der (Meth)Acrylatcopolymerisate, insbesondere der glycidylgruppenhaltigen, verwendet.

Höherfunktionelle Monomere der vorstehend beschriebenen Art werden im allgemeinen in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der Copolymerisate, insbesondere der (Meth)Acrylatcopolymerisate, führen, es sei denn, man will gezielt vernetzte polymere Mikroteilchen herstellen.

Beispiele geeigneter Monomereinheiten zur Einführung reaktiver funktioneller Gruppen in Polyester oder Polyester-Polyurethane sind 2,2-Dimethylolethyl- oder -propylamin, die mit einem Keton blockiert sind, wobei die resultierende Ketoximgruppe nach dem Einbau wieder hydrolysiert wird; oder Verbindungen, die zwei Hydroxylgruppen oder zwei primäre und/oder sekundäre Aminogruppen sowie mindestens eine Säuregruppe, insbesondere mindestens eine Carboxylgruppe und/oder mindestens eine Sulfonsäuregruppe, enthalten, wie Dihydroxypropionsäure, Dihydroxybernsteinsäure, Dihydroxybenzoesäure, 2,2-Dimethylolessigsäure, 2,2-Dimethylolpropionsäure, 2,2-Dimethylolbuttersäure, 2,2-Dimenthylolpentansäure, ###,###-Diaminovaleriansäure, 3,4-Diaminobenzoesäure, 2,4-Diaminotoluolsulfonsäure oder 2,4-Diaminodiphenylethersulfonsäure.

Ein Beispiel zur Einführung reaktiver funktioneller Gruppen über polymeranaloge Reaktionen ist die Umsetzung Hydroxylgruppen enthaltender Harze mit Phosgen, wodurch Chlorformiatgruppen enthaltende Harze resultieren, und die polymeranaloge Umsetzung der Chlorformiatgruppen enthaltenden Harze mit Ammoniak und/oder primären und/oder sekundären Aminen zu Carbamatgruppen enthaltenden Harzen. Weitere Beispiele geeigneter Methoden dieser Art sind aus den Patentschriften US 4,758,632 A, US 4,301,257 A oder US 2,979,514 A bekannt.

Die Bindemittel der farb- und/oder effektgebenden Dual-Cure-Pulverslurries enthalten desweiteren im statistischen Mittel mindestens eine, vorzugsweise mindestens zwei, Gruppe(n) mit mindestens einer mit aktinischer Strahlung aktivierbaren Bindung(en) pro Molekül. Die Bindemittel der mit aktinischer Strahlung härtbaren farb- und/oder effektgebenden Pulverslurries enthalten mindestens zwei dieser Gruppen.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff Phosphor- oder Kohlenstoff Silizium-Einzelbindungen oder -Doppelbindungen. Von diesen sind die Kohlenstoff Kohlenstoff Doppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte Gruppe eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der hier in Rede stehenden Gruppe vorliegen. Erfindungsgemäß ist es von besonderem Vorteil zwei, insbesondere eine, Doppelbindung zu verwenden.

Werden im statistischen Mittel mehr als eine mit aktinischer Strahlung aktivierbare Gruppe pro Molekül angewandt, sind die Gruppen strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, mit aktinischer Strahlung aktivierbare Gruppen verwendet werden, die sich von zwei, drei, vier oder mehr, insbesondere aber zwei, Monomerklassen ableiten.

Beispiele geeigneter Gruppen sind (Meth)Acrylat-, Ethacrylat-, Crotonat-, Cinnamat-, Vinylether-, Vinylester-, Dicyclopentadienyl-, Norbomenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbomenyl-, lsoprenyl-, Isopropenyl-, Allyl- oder Butenyl estergruppen, insbesondere aber Acrylatgruppen.

Vorzugsweise sind die Gruppen über Urethan-, Harnstoff-, Allophanat-, Ester-, Ether- und/oder Amidgruppen, insbesondere aber über Estergruppen, an die jeweiligen Grundstrukturen der Bindemittel gebunden. Üblicherweise geschieht dies durch übliche und bekannte polymeranaloge Reaktionen wie etwa die Reaktion von seitenständigen Glycidylgruppen mit den vorstehend beschriebenen olefinisch ungesättigten Monomeren, die eine Säuregruppe enthalten, von seitenständigen Hydroxylgruppen mit den Halogeniden dieser Monomeren, von Hydroxylgruppen mit Doppelbindungen enhaltenden Isocyanaten wie Vinylisocyanat, Methacryloylisocyanat und/oder 1-(1-Isocyanato-1-methylethyl)-3-(1-methylethenyl)-benzol (TMI® der Firma CYTEC) oder von Isocanatgruppen mit den vorstehend beschriebenen hydroxylgruppenhaltigen Monomeren.

Es können in den Dual-Cure-Pulverlacken auch Gemische aus rein thermisch härtbaren und rein mit aktinischer Strahlung härtbaren Bindemitteln angewandt werden.

Die stoffliche Zusammensetzung der Bindemittel weist im Grunde keine Besonderheiten auf, sondern es kommen
- all die in den amerikanischen Patentschriften US 4,268,542 A oder US 5,379,947 A und den Patentanmeldungen DE 27 10 421 A 1, DE 195 40 977 A1, DE 195 18 392 A1, DE 196 17 086 A1, DE 196 13 547 A1, DE 196 18 657 A1, DE 196 52 813 A 1, DE 196 17 086 A 1, DE 198 14 471 A 1, DE 198 41 842 A 1 oder DE 198 41 408 A 1, den nicht vorveröffentlichten deutschen Patentanmeldungen DE 199 08 018.6 oder DE 199 08 013.5 oder der europäischen Patentanmeldung EP 0 652 264 A 1 beschriebenen, für die Verwendung in thermisch und/oder mit aktinischer Strahlung härtbaren Pulverklarlack-Slurries vorgesehenen Bindemittel,
- all die in den Patentanmeldungen DE 198 35 296 A 1, DE 197 36 083 A 1 oder DE 198 41 842 A 1 beschriebenen, für die Verwendung in Dual-Cure-Klarlacken vorgesehenen Bindemittel oder
- all die in der deutschen Patentanmeldung DE 42 22 194 A 1, der ProduktInformation der Firma BASF Lacke + Farben AG, "Pulverlacke", 1990, der Finnenschrift von BASF Coatings AG "Pulverlacke, Pulverlacke für industrielle Anwendungen", Januar, 2000, oder dem deutschen Patent DE 196 32 426 C 2 beschriebenen, für die Verwendung in thermisch härtbaren Pulverlacken vorgesehenen Bindemittel in Betracht.

Als zusätzliche Bindemittel für die Dual-Cure-Pulverlacke oder als die alleinigen Bindemittel für die mit aktinischer Strahlung härtbaren Pulverlacke kommen die in den den europäischen Patentanmeldungen EP 0 928 800 A 1, EP 0 636 669 A 1, EP 0 410 242 A1, EP 0 783 534 A 1, EP 0 650 978 A1, EP 0 650 979 A1, EP 0 650 985 A 1, EP 0 540 884 A 1, EP 0 568 967 A 1, EP 0 054 505 A 1 oder EP 0 002 866 A 1, den deutschen Patentanmeldungen DE 197 09 467 A 1, DE 42 03 278 A 1, DE 33 16 593 A 1, DE 38 36 370 A 1, DE 24 36 186 A 1 oder DE 20 03 579 B 1, den internationalen Patentanmeldungen WO 97/46549 oder WO 99/14254 oder den amerikanischen Patentschriften US 5,824,373 A, US 4,675,234 A, US 4,634,602 A, US 4,424,252 A, US 4,208,313 A, US 4,163,810 A, US 4,129,488 A, US 4,064,161 A oder US 3,974,303 A beschriebenen, zur Verwendung in UV-härtbaren Klarlacken und Pulverklarlacken vorgesehenen Bindemittel in Betracht.

Auch die Herstellung der Bindemittel weist keine methodischen Besonderheiten auf, sondern erfolgt mit Hilfe der üblichen und bekannten Methoden der Polymerenchemie, wie sie beispielsweise in den vorstehend aufgeführten Patentschriften im Detail beschrieben werden.

Weitere Beispiele geeigneter Herstellverfahren für (Meth)Acrylatcopolymerisate werden in der europäischen Patentanmeldung EP 0 767 185 A1, den deutschen Patenten DE 22 14 650 B 1 oder DE 27 49 576 B 1 und den amerikanischen Patenten US 4,091,048 A 1, US 3,781,379 A, US 5,480,493 A, US 5,475,073 A oder US 5,534,598 A oder in dem Standardwerk Houben-Weyl, Methoden der organischen Chemie, 4. Auflage, Band 14/1, Seiten 24 bis 255,1961, beschrieben. Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in den Patentanmeldungen DE 1 071 241 B 1, EP 0 498 583 A 1 oder DE 198 28 742 A 1 oder in dem Artikel von K. Kataoka in Chemical Engineering Science, Band 50, Heft 9,1995, Seiten 1409 bis 1416, beschrieben werden, in Betracht.

Die Herstellung von Polyestern und Alkydharzen wird beispielsweise noch in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, beschrieben.

Die Herstellung von Polyurethanen und/oder acrylierten Polyurethanen wird beispielsweise noch in den Patentanmeldungen EP 0 708 788 A 1, DE 44 01 544 A 1 oder DE 195 34 361 A 1 beschrieben.

Der Gehalt der farb- und/oder effektgebenden Pulverslurries an Bindemitteln kann sehr breit variieren und richtet sich vor allem danach, ob sie thermisch selbstvernetzend sind. In diesem Fall kann er vorzugsweise 20 bis 99,5, bevorzugt 25 bis 99,2, besonders bevorzugt 30 bis 99, ganz besonders bevorzugt 35 bis 98,8 und insbesondere 40 bis 98,7 Gew.-%, bezogen auf den Festkörper der farb- und/oder effektgebenden Pulverslurry, betragen. In den anderen Fällen liegt der Bindemittelgehalt vorzugsweise bei 10 bis 80, bevorzugt 15 bis 75, besonders bevorzugt 20 bis 70, ganz besonders bevorzugt 25 bis 65 und insbesondere 30 bis 60 Gew.-%, bezogen auf den Festkörper der farb- und/oder effektgebenden Pulverslurry.

Die thermisch oder thermisch und mit aktinischer Strahlung härtbaren fremdvernetzenden Pulverlacke enthalten mindestens ein Vernetzungsmittel, das die zu den reaktiven funktionellen Gruppen der Bindemittel komplementären reaktiven funktionellen Gruppen enthält. Der Fachmann kann daher die für einen gegebenen Pulverlack geeigneten Vernetzungsmittel leicht auswählen.

Beispiele geeigneter Vernetzungsmittel sind
- Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A 1 oder EP 0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden,
- Carboxylgruppen enthaltende Verbindungen oder Harze, wie sie beispielsweise in der Patentschrift DE 196 52 813 A 1 oder 198 41 408 A 1 beschrieben werden, insbesondere 1,12-Decandicarbonsäure,
- Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A oder US 3,781,379 A beschrieben werden,
- blockierte Polyisocyanate, wie sie beispielsweise in den Patentschriften US 4,444,954 A 1, DE 196 17 086 A 1, DE 196 31 269 A 1, EP 0 004 571 1 A 1 oder EP 0 582 051 A 1 beschrieben werden,
- beta-Hydroxyallcylamide wie N,N,N',N'-Tetrakis(2-hydroxyethyl)adipamid oder N,N,N',N'-Teti-akis(2-hydroxypropyl)adipamid,
- Tris(alkoxycarbonylamino)-triazine, wie sie in den Patentschriften US 4,939,213 A 1, US 5,084,541 A, US 5,288,865 A oder EP 0 604 922 A 1 beschrieben werden, und/oder.
- phenolische Härter, wie sie beispielsweise in dem deutschen Patent DE 196 32 426 C 2, Seite 5, Zeile 48, bis Seite 6, Zeile 64, beschrieben werden.

Der Gehalt der farb- und/oder effektgebenden Pulverslurries an den Vernetzungsmitteln kann ebenfalls sehr breit variieren und richtet sich nach den Erfordernissen des Einzelfalls, insbesondere nach der Anzahl der vorhandenen komplementären reaktiven funktionellen Gruppen in den Bindemitteln und den Vernetzungsmitteln. Vorzugsweise liegt er bei 1 bis 50, bevorzugt 2 bis 45, besonders bevorzugt 3 bis 40, ganz besonders bevorzugt 4 bis 35 und insbeondere 5 bis 30 Gew.-%, bezogen auf den Festkörper der farb- und/oder effektgebenden Pulverslurry.

Außer den vorstehend beschriebenen Pigmenten, Bindemitteln sowie gegebenenfalls Vernetzungsmitteln kann die erfindungsgemäß zu verwendende farb- und/oder effektgebende Pulverslurry noch mindestens einen Zusatzstoff enthalten. Dieser kann je nach seinen physikalisch chemischen Eigenschaften und/oder seiner Funktion im wesentlichen in den dispergierten Pulverlackteilchen oder im wesentlichen in der kontinuierlichen Phase vorliegen.

Beispiele geeigneter Zusatzstoffe sind
- thermisch härtbare Reaktiverdünner wie stellungsisomere Diethyloctandiole oder Hydroxylgruppen enthaltende hyperverzweigte Verbindungen oder Dendrimere;
- mit aktinischer Strahlung härtbare Reaktiwerdünner, wie die in Römpp Lexikon Lacke und Druckfarben, Georg Thieme Verlag, Stuttgart, New York, 1998, auf Seite 491 unter dem Stichwort »Reaktiwerdünner« beschriebenen;
- Katalysatoren für die Vernetzung wie Dibutylzinndilaurat, Lithiumdecanoat oder Zinkoctoat, mit Aminen blockierte organische Sulfonsäuren, quarternäre Ammoniumverbindungen, Amine, Imidazol und Imidazolderivate wie 2-Styrylimidazol, 1-Benzyl-2-methylimidazol, 2-Methylimidazol und 2-Butylimidazol, wie in dem belgischen Patent Nr. 756,693 beschrieben werden, oder Phosphonium-Katalysatoren wie Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex, wie sie beispielsweise in den US-Patentschriften US 3,477,990 A oder US 3,341,580 A beschrieben werden;
- thennolabile radikalische Initiatoren wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether;
- Photoinitiatoren, wie sie in Römpp Chemie Lexikon, 9. erweiterte und neubearbeitete Auflage, Georg Thieme Verlag Stuttgart, Bd. 4, 1991, oder in Römpp Lexikon Lacke und Druckfarben, Georg Thieme Verlag Stuttgart, 1998, Seiten 444 bis 446, beschrieben werden;
- Antioxidantien wie Hydrazine und Phosphorverbindungen;
- UV-Absorber wie Triazine und Benztriphenol;
- Lichtschutzmittel wie HALS-Verbindungen, Benztriazole oder Oxalanilide;
- Verlaufmittel;
- Radikalfänger und Polymerisationsinhibitoren wie organische Phosphite oder 2,6 Di-tert-Butylphenol-Derivate;
- Slipadditive;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenole;
- Netzmittel wie Siloxane, fluorhaltige Verbindungen, Carbonsäurehalbester, Phosphorsäureester, Polyacrylsäuren und deren Copolymere oder Polyurethane, wie sie beispielsweise in der Patentanmeldung DE 198 35 296 A 1 beschrieben werden, insbeondere in Verbindung mit den nachstehend beschriebenen assoziativen Verdickern auf Polyurethanbasis;
- Haftvermittler wie Tricyclodecandimethanol;
- filmbildende Hilfsmittel wie Cellulose-Derivate;
- Flammschutzmittel;
- Entlüftungsmittel wie Diazadicycloundecan oder Benzoin;
- Wasserrückhaltemittel;
- Rieselhilfen;
- rheologiesteuernde Additive (Verdicker), wie die aus den Patentanmeldungen WO 94/22968, EP 0 276 501 A 1, EP 0 249 201 A 1 oder WO 97/12945 bekannten; vernetzte polymere Mikroteilchen, wie sie beispielsweise in der EP 0 008 127 A 1 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder Polyacrylate; oder assoziative Verdickungsmittel auf Polyurethanbasis, wie sie in Römpp Lexikon Lacke und Druckfarben, Georg Thieme Verlag, Stuttgart, New York, 1998, »Verdickungsmittel«, Seiten 599 bis 600, und in dem Lehrbuch »Lackadditive« von Johan Bieleman, Wiley-VCH, Weinheim, New York, 1998, Seiten 51 bis 59 und 65, beschrieben werden; insbesondere Kombinationen von ionischen und nicht ionischen Verdickern, wie sie in der Patentanmeldung DE 198 41 842 A 1 zu Einstellung eines strukturviskosen Verhaltens beschrieben werden, oder die Kombination von assoziativen Verdickern auf Polyurethanbasis und Netzmitteln auf Polyurethanbasis, wie sie in der deutschen Patentanmeldung DE 198 35 296 A 1 im Detail beschrieben wird;
Weitere Beispiele geeigneter Zusatzstoffe werden in dem Lehrbuch "Lackadditive" von Johan Bieleman, Wiley-VCH, Weinheim, New York, 1998, beschrieben. Sie werden in den üblichen und bekannten Mengen angewandt.

Die Herstellung der erfindungsgemäß zu verwendenden farb- und/oder effektgebenden Pulverslurries aus den vorstehend beschriebenen Bestandteilen weist ebenfalls keine Besonderheiten auf, sondern erfolgt im wesentlichen wie in den Patentanmeldungen DE 195 40 977 A1, DE 195 18 392 A 1, DE 196 17 086 A 1, DE-A-196 13 547, DE 196 18 657 A 1, DE 196 52 813 A 1, DE 196 17 086 A 1, DE-A-198 14 471 A 1, DE 198 41 842 A 1 oder DE 198 41 408 A 1 im Detail beschrieben, nur daß im Rahmen der vorliegenden Erfindung noch Pigmente mitverarbeitet werden.

In einer ersten bevorzugten Variante der Herstellung wird von einem farb- und/oder effektgebenden Pulverlack ausgegangen, der wie in der ProduktInformation der Firma BASF Lacke + Farben AG, "Pulverlacke", 1990 oder der Firmenschrift von BASF Coatings AG "Pulverlacke, Pulverlacke für industrielle Anwendungen", Januar 2000, durch Homogenisieren und Dispergieren, beispielsweise mittels eines Extruders oder Schneckenkneters, und Vermahlen hergestellt wird. Nach Herstellung der Pulverlacke werden diese durch weiteres Vermahlen und ggf. durch Sichten und Sieben für die Dispergierung vorbereitet.

Aus dem Pulverlack kann anschließend durch Naßvermahlung oder durch Einrühren von trocken vermahlenem Pulverlack die farb- und/oder effektgebende Pulverslurry hergestellt werden. Besonders bevorzugt wird die Naßvermahlung.

In einer weiteren bevorzugten Variante werden die vorstehend beschriebenen Bestandteile in einem organischen Lösemittel emulgiert, wodurch eine Emulsion vom Typ Öl-in-Wasser resultiert, hiernach wird das organische Lösemittel entfernt, wodurch sich die emulgierten Tröpfchen verfestigen und die erfindungsgemäß zu verwendende farb- und/oder effektgebende Pulverslurry resultiert. Ggf. kann sie noch naßvermahlen werden, um die Filtrierbarkeit zu verbessern.

In einer dritten bevorzugten Variante wird eine flüssige Schmelze der vorstehend beschriebenen Bestandteile zusammen mit den nicht aufgeschmolzenen Pigmenten in eine Emulgiervornchtung vorzugsweise unter Zusatz von Wasser und Stabilisatoren gegeben, die erhaltene Emulsion' abgekühlt und filtriert, wodurch die erfindungsgemäß zu verwendende farb- und/oder effektgebende Pulverslurry resultiert. Um eine hohe Mischgüte erzielen, ist es wesentlich, die Mischung lösemittelfrei in der Schmelze durchzuführen. Demgemäß werden die polymeren Bestandteile als viskose Harzschmelzen in die Dispergieraggregate eingespeist.

Methodisch gesehen weist das Vermischen eines der vorstehend beschriebenen Pulverslurryklarlacke (A) und mindestens einer der vorstehend beschriebenen farb- und/oder effektgebenden Pulverslurnes (B) oder einer der vorstehend beschriebenen farb- und/oder effektgebenden Pulverslurries (A) und mindestens einer der vorstehend beschriebenen farb- und/oder effektgebenden Pulverslurries (B) im Rahmen des erfmdungsgemäßen Herstellverfahrens oder Tönverfahrenx keine Besonderheiten auf, sondern erfolgt mit Hilfe üblicher und bekannter Mischaggregate wie Rührkessel, Dissolver oder Extruder. Idealerweise erfolgt das Vermischen per Hand, insbesondere bei der Herstellung von Kleinstmengen.

Hierbei kann das Mengenverhältnis von (A) zu (B) sehr breit variieren und richtet sich vor allem nach den Farbtönen und/oder nach den optischen Effekten, die einzustellen sind. Der Fachmann kann das Mengenverhältnis im Einzelfall anhand seines allgemeinen Fachwissens und unter Zuhilfenahme orientierender Tönversuche leicht ermitteln.

Außerdem kann mehr als eine farb- und/oder effektgebende Pulverslurry (B) bei dem erfindungsgemäßen Herstellverfahren oder Tönverfahren angewandt werden. Werden zwei oder mehr farb- und/oder effektgebende Pulverslurnes (B) eingesetzt, weisen sie Farbtöne und/oder optische Effekte auf, die untereinander und von denjenigen der farb- und/oder effektgebenden Pulverslurry (A) verschieden sind. Dadurch ist von vornherein oder nachträglich eine besonders exakte Einstellung der Farbtöne und/oder optischen Effekte der erfindungsgemäßen Pulverslurries ohne großen Aufwand möglich. Dadurch können in einfacher Weise erfindungsgemäße Pulverslurries der unterschiedlichsten Buntheit und/oder Intensität der optischen Effekte nach Bedarf in den jeweils erforderlichen Mengen hergestellt werden. Deswegen kann auch auf die Herstellung von großen Mengen von Pulverslurries mit bestimmten Farbtönen und/oder optischen Effekten verzichtet werden, wodurch weniger oder gar keine Entsorgungsprobleme mehr auftreten.

Ein weiterer Vorteil des erfindungsgemäßen Herstellverfahrens und Tönverfahrens ist, daß auch überschüssige, nicht mehr verwendbare farb- und/oder effektgebende Pulverslurries und Pulverklarlacke oder Fehlchargen noch immer für die Herstellung der erfindungsgemäßen Pulverslurnes verwendet werden können und daher nicht entsorgt werden müssen.

Es ist ein ganz wesentlicher Vorteil der erf'mdungsgemäßen Pulverslurnes und des erfindungsgemäßen Herstellverfahrens und Tönverfahrens, daß sie mit Hilfe eines Mischsystems hergestellt bzw. durchgeführt werden können.

Das Mischsystem enhält eine farb- und/oder effektgebende Pulverslurry (A) und mindestens eine färb- und/oder effektgebende Puvlerslurry (B), die einen anderen Farbton und/oder optischen Effekt als die Pulverslurry (A) aufweist. Darüber hinaus kann das Mischsystem noch einen Pulverslurryklarlack (A) enthalten. Grundprinzip des Mischsystems ist, daß eine sehr große Anzahl, z.B. mehrere tausend, von Farbtönen und/oder optischen Effekten mit einer begrenzten Anzahl von farb- und/oder effektgebenden Pulverslurries (A) und (B) gemischt werden können. Überraschenderweise reichen dabei 10 bis 50 unterschiedlich farb- und/oder effektgebende Pulverslurries aus, um beispielsweise so gut wie alle bei der Automobilserienlackierung oder -reparaturlackierung gängigen Farbtöne und/oder optischen Effekte nachzustellen.

Das erfindungsgemäße Mischsystem wird vorzugsweise in der Form des erfindungsgemäßen Modulsystems gehandelt.

Dieses umfaßt einen Effektmodul (I), enthaltend eine farb- und/oder effektgebende Pulverslurry (A), und mindestens einen Effektmodul (II), enthaltend eine farb- und/oder effektgebende Pulverslurry (B). Für die Anzahl der Effektmodule (I) und (II) gilt das vorstehend Gesagte sinngemäß. Darüber hinaus kann das erfindungsgemäße Modulssystem einen Klarlackmodul (IV), enthaltend einen Pulverslurrylarlack (A), umfassen.

Eine wesentliche funktionale Komponente (III) des erfindungsgemäßen Modulsystems ist das Farbmischformel-System (C). Dieses wird auf der Basis der unterschiedlich farb- und/oder effektgebenden Pulverslurries (A) und (B) sowie ggf. des Pulverslurryklarlacks (A) erarbeitet und in der Form von Rezepturen der erfindungsgemäßen Pulverslurries und von standardisierten Proben der aus den einzelnen erfindungsgemäßen Pulverslurries hergestellten Beschichtungen dokumentiert.

Die erfmdungsgemäßen Pulverslurries, insbesondere die nach dem erfindungsgemäßen Herstellverfahren hergestellten, die nach dem erfindungsgemäßen Tönverfahren nachträglich eingestellten und/oder die mit Hilfe des erfindungsgemäßen Mischsystems oder Modulsystems hergestellten, sind hervorragend für alle Verwendungszwecke geeignet, für die farb- und/oder effektgebende Pulverslurries üblicherweise verwendet werden. Insbesondere sind sie für die Automobilerstlackierung, die Automobilreparaturlackierung, die Lackierung von Bauwerken im Innen- und Außenbereich, die Lackierung von Türen, Fenstern und Möbeln sowie die industrielle Lackierung, inklusive Coil Coating, Container Coating und die Imprägnierung und/oder Beschichtung elektrotechnischer Bauteile, geeignet.

Hierbei kommen sie vor allem für die Herstellung von farb- und/oder effektgebenden Grundierungen, Füllern, farb- und/oder effektgebenden Unidecklackierungen oder Basislackierungen oder Kombinationseffektschichten, die mehrere dieser Funktionen übernehmen können, für die grundierten und ungrundierten Substrate, wie sie auf den vorstehend genannten technischen Gebieten üblicherweise eingesetzt werden, in Betracht.

Sie können problemlos appliziert werden. Die applizierten Schichten weisen einen hervorragenden Verlauf auf. Für ihre Härtung können alle üblichen und bekannten Vorrichtungen und Verfahren der thermischen Härtung und/oder der Härtung mit aktinischer Strahlung angewandt werden. Die resultierenden Beschichtungen weisen brilliante Farben und/oder intensive optische Effekte auf und sind frei von Oberflächenstörungen.

### Beispiele

### Herstellbeispiel 1

### Die Herstellung einer weißen Pulverslurry

Für die Herstellung der weißen Pulverslurry wurde zunächst ein weißer Pulverlack aus 46,9 Gewichtsteilen eines festen Epoxidharzes (DOW® E.R. 642 U-20, 100%ig, der Firma Dow, Schwalbach), 20,85 Gewichtsteilen eines phenolischen Härters, hergestellt aus einem Epoxidharz und einem Überschuß an Bisphenol A (DOW® E.H. 82, 100%ig, der Firma Dow, Schwalbach) und 31,25 Gewichtsteilen Titan Rutil 2310 (Lacke und handelsübliches Titandioxidpigment der Firma Kronos International) durch Extrusion der Bestandteile und Vermahlen der resultierenden Mischung hergestellt.

Die weiße Pulverslurry wurde aus den folgenden Bestandteilen durch Vermischen hergestellt:

| | |
|---|---|
| 62,48 | Gewichtsteile deionisiertes Wasser, |
| 0,5 | Gewichtsteile Acrysol® RM-8, (nicht ionischer Verdicker auf der Basis eines wasserlöslich Polyurethans der Firma Rohm und Haas; 35prozentig), |
| 1,0 | Gewichtsteile Disperse Ayd® W-22 (anionisch/nicht ionisches Netzmittel der Firma Krahn Chemie, Hamburg; 35prozentig in Wasser/Propylenglykol), |
| 0,02 | Gewichtsteile Triton® X 100 (nicht ionisches Tensid, Octylphenoxypolyethoxyethanaol der Firma Union Carbide), |
| 36,0 | Gewichtsteile des weißen Pulverlacks und |
| 0,05 | Gewichtsteile Byk® 345 (polyethermodifiziertes Polydimethylsiloxan der Firma Byk Chemie). |

50% der festen Partikel der weißen Pulverslurry wiesen eine Korngrößen < 5,5 µm auf.

### Herstellbeispiel 2

### Die Herstellung einer schwarzen Pulverslurry

Für die Herstellung der schwarzen Pulverslurry wurde zunächst ein schwarzer Pulverlack aus 64,8 Gewichtsteilen des Epoxidharzes des Herstellbeispiels 1, 30,2 Gewichtsteilen bis phenolischen Härters des Herstellbeispiels 1 und 5,0 Gewichtsteilen Printex® U (Rußpigment der Firma Degussa) durch Extrusion der Bestandteile und Vermahlen der resultierenden Mischung hergestellt.

Die schwarze Pulverslurry wurde aus den folgenden Bestandteilen durch Vermischen hergestellt:

| | |
|---|---|
| 62,48 | Gewichtsteile deionisiertes Wasser, |
| 0,5 | Gewichtsteile Acrysol® RM-8, (nicht ionischer Verdicker auf der Basis eines wasserlöslich Polyurethans der Firma Rohm und Haas; 35prozentig), |
| 1,0 | Gewichtsteile Disperse Ayd® W-22 (anionisch/nicht ionisches Netzmittel der Firma Krahn Chemie, Hamburg; 35prozentig in Wasser/Propylenglykol), |
| 0,02 | Gewichtsteile Triton® X 100 (nicht ionisches Tensid, Octylphenoxypolyethoxyethanaol der Firma Union Carbide), |
| 36,0 | Gewichtsteile des schwarzen Pulverlacks und |
| 0,05 | Gewichtsteile Byk® 345 (polyethermodifiziertes Polydimethylsiloxan der Firma Byk Chemie). |

50% der festen Partikel der weißen Pulverslurry wiesen eine Korngrößen < 5,5 µm auf.

### Herstellbeispiel 3

### Die Herstellung einer gelben Pulverslurry

Für die Herstellung der gelben Pulverslurry wurde zunächst ein schwarzer Pulverlack aus 51,1 Gewichtsteilen des Epoxidharzes des Herstellbeispiels 1, 23,9 Gewichtsteilen bis phenolischen Härters des Herstellbeispiels 1 und 25 Gewichtsteilen Bayferrox® 3910 (Eisenoxidpigment der Firma Karl Ansberger, Köln) durch Extrusion der Bestandteile und Vermahlen der resultierenden Mischung hergestellt.

Die gelbe Pulverslurry wurde aus den folgenden Bestandteilen durch Vermischen hergestellt:

| | |
|---|---|
| 62,48 | Gewichtsteile deionisiertes Wasser, |
| 0,5 | Gewichtsteile Acrysol® RM-8, (nicht ionischer Verdicker auf der Basis eines wasserlöslich Polyurethans der Firma Rohm und Haas; 35prozentig). |
| 1,0 | Gewichtsteile Disperse Ayd® W-22 (anionisch/nicht ionisches Netzmittel der Firma Krahn Chemie, Hamburg; 35prozentig in Wasser/Propylenglykol), |
| 0,02 | Gewichtsteile Triton® X 100 (nicht ionisches Tensid, Octylphenoxypolyethoxyethanaol der Firma Union Carbide), |
| 36,0 | Gewichtsteile des gelben Pulverlacks und |
| 0,05 | Gewichtsteile Byk® 345 (polyethermodifiziertes Polydimethylsiloxan der Firma Byk Chemie). |

50% der festen Partikel der weißen Pulverslurry wiesen eine Korngrößen < 5,5 µm auf.

### Beispiele 1 bis 5

### Die Herstellung erfindungsgemäßer Pulverslurries

### Beispiel 1:

Es wurde eine erfindungsgemäße Pulverslurry mit dem Farbton Beige durch Vermischen von 90,1 Gewichtsteilen der weißen Pulverslurry gemäß Herstellbeispiel 1, 7,2 Gewichtsteilen der gelben Pulverslurry gemäß Herstellbeispiel 3 und 2,7 Gewichtsteilen der schwarzen Pulverslurry gemäß Herstellbeispiel 2 hergestellt.

### Beispiel 2:

Es wurde eine erfindungsgemäße Pulverslurry mit dem Farbton Hellgrau durch Vermischen von 97,1 Gewichtsteilen der weißen Pulverslurry gemäß Herstellbeispiel 1 und 2,9 Gewichtsteilen der schwarzen Pulverslurry gemäß Herstellbeispiel 2 hergestellt.

### Beispiel 3:

Es wurde eine erfindungsgemäße Pulverslurry mit dem Farbton Hellgelb durch Vermischen von 45,1 Gewichtsteilen der weißen Pulverslurry gemäß Herstellbeispiel 1 und 54,9 Gewichtsteilen der gelben Pulverslurry gemäß Herstellbeispiel 3 hergestellt.

### Beispiel 4:

Es wurde eine erfindungsgemäße Pulverslurry mit dem Farbton Dunkelgelb durch Vermischen von 90,8 Gewichtsteilen der gelben Pulverslurry gemäß Herstellbeispiel 3, 3,5 Gewichtsteilen der weißen Pulverslurry gemäß Herstellbeispiel 1 und 5,7 Gewichtsteilen der schwarzen Pulverslurry gemäß Herstellbeispiel 2 hergestellt.

### Beispiel 5:

Es wurde eine erfindungsgemäße Pulverslurry mit dem Farbton Dunkelgrau durch Vermischen von 95,3 Gewichtsteilen der schwarzen Pulverslurry gemäß Herstellbeispiel 2, 3,8 Gewichtsteilen der weißen Pulverslurry gemäß Herstellbeispiel 1 und 0,9 Gewichtsteilen der gelben Pulverslurry gemäß Herstellbeispiel 3 hergestellt.

Die erfindungsgemäßen Pulverslurnes der Beispiele 1 bis 5 ließen sich einfach herstellen. Die Reproduzierbarkeit der Farbtöne war hervorragend. Die erfindungsgemäßen Pulverslurries wurden auf Stahltafeln, die mit einer üblichen und bekannten Elektrotauchlackierung beschichtet waren, appliziert. Der Verlauf der resultierenden Pulverslurryschichten war hervorragend. Nach dem Einbrennen resultierten beige (Beispiel 1), hellgraue (Beispiel 2), hellgelbe (Beispiel 3), dunkelgelbe (Beispiel 4) und dunkelgraue (Beispiel 5) Beschichtungen, die den vorgegebenen Spezifikationen entsprachen und frei von Oberflächenstörungen waren.

## Patentansprüche

1. Farb- und/oder effektgebenden Pulverslurnes, herstellbar, indem man
(A) einen Pulverslunyklarlack mit
(B) mindestens einer farb- und/oder effektgebenden Pulverslurry,
oder alternativ
(A) eine farb- und/oder effektgebende Pulverslurry mit
(B) mindestens einer farb- und/oder effektgebenden Pulverslurry, die einen anderen Farbton und/oder optischen Effekt als die Pulverslurry (A) aufweist,
vermischt.

2. Pulverslurries nach Anspruch 1, **dadurch gekennzeichnet, daß** es sich bei den optischen Effekten um Metallic-Effekte und/oder dichroitische optische Effekte handelt.

3. Pulverslurnes nach Anspruch 1 oder 2, **dadurch gekennzeichnet, daß** der Pulverslurryklarlack (A), die farb- und/oder effektgebende Pulverslurry (A) und die farb- und/oder effektgebende Pulverslurry (B) thermisch und/oder mit aktinischer Strahlung härtbar sind.

4. Pulverslurnes nach einem der Ansprüche 1 bis 3, **dadurch gekennzeichnet, daß** der Pulverslurryklarlack (A), die farb- und/oder effektgebende Pulverslurry (A) und die farb- und/oder effektgebende Pulverslurry (B) bis auf die farb- und/oder effektgebenden Pigmente die gleichen Bestandteile, insbesondere die gleichen Bindemittel, enthalten.

5. Verfahren zur Herstellung von farb- und/oder effektgebenden Pulverslurries durch Vermischen von Pulverslurries mit farb- und/oder effektgebenden Pigmenten, **dadurch gekennzeichnet, daß** man
(A) einen Pulverslurryklarlack mit
(B) mindestens einer farb- und/oder effektgebenden Pulverslurry,
oder alternativ
(A) eine farb- und/oder ef1'ektgebende Pulverslurry mit
(B) mindestens einer farb- und/oder effektgebenden Pulverslurry, die einen anderen Farbton und/oder optischen Effekt als die Pulverslurry (A) aufweist,
vermischt.

6. Verfahren nach Anspruch 5, **dadurch gekennzeichnet, daß** es sich bei den optischen Effekten um Metallic-Effekte und/oder dichroitische optische Effekte handelt.

7. Verfahren nach Anspruch 5 oder 6, **dadurch gekennzeichnet, daß** der Pulverslunyklarlack (A), die farb- und/oder effektgebende Pulverslurry (A) und die farb- und/oder effektgebende Pulverslurry (B) thermisch und/oder mit aktinischer Strahlung härtbar sind.

8. Verfahren nach einem der Ansprüche 5 bis 7, **dadurch gekennzeichnet, daß** der Pulverslurryklarlack (A), die farb- und/oder effektgebende Pulverslurry (A) und die farb- und/oder effektgebenden Pulverslurry (B) bis auf die farb- und/oder effektgebenden Pigmente die gleichen Bestandteile, insbesondere die gleichen Bindemittel, enthalten.

9. Verfahren zur nachträglichen Einstellung der Farbtöne und/oder der optischen Effekte von farb- und/oder effektgebenden Pulverslurries, **dadurch gekennzeichnet, daß** man
(A) eine farb- und/oder effektgebende Pulverslurry mit
(B) mindestens einer farb- und/oder effektgebenden Pulversluny, die einen anderen Farbton und/oder optischen Effekt als die Pulverslurry (A) aufweist,
vermischt.

10. Verfahren nach Anspruch 9, **dadurch gekennzeichnet, daß** es sich bei den optischen Effekten um Metallic-Effekte und/oder dichroitische optische Effekte handelt.

11. Verfahren nach Anspruch 9 oder 10, **dadurch gekennzeichnet, daß** der Pulverslurryklarlack (A), die farb- und/oder effektgebende Pulverslurry (A) und die farb- und/oder effektgebende Pulverslurry (B) thermisch und/oder mit aktinischer Strahlung härtbar sind.

12. Verfahren nach einem der Ansprüche 9 bis 11, **dadurch gekennzeichnet, daß** der Pulverslurryklarlack (A), die farb- und/oder effektgebende Pulverslurry (A) und die farb- und/oder effektgebende Pulverslurry (B) bis auf die farb- und/oder effektgebenden Pigmente die gleichen Bestandteile, insbesondere die gleichen Bindemittel, enthalten.

13. Mischsystem zur Herstellung von farb- und/oder effektgebenden Pulverslurries und/oder zur nachträglichen Einstellung ihrer Farbtöne und/oder ihrer optischen Effekte, enthaltend
(A) eine farb- und/oder effektgebende Pulverslurry und
(B) mindestens eine weitere farb- und/oder effektgebende Pulverslurry, die einen anderen Farbton und/oder optischen Effekt als die Pulverslurry (A) aufweist.

14. Mischsystem nach Anspruch 13, **dadurch gekennzeichnet, daß** es sich bei den optischen Effekten um Metallic-Effekte und/oder dichroitische optische Effekte handelt.

15. Mischsystem nach Anspruch 13 oder 14, **dadurch gekennzeichnet, daß** der Pulverslurryklarlack (A), die farb- und/oder effektgebende Pulverslurry (A) und die farb- und/oder effektgebende Pulverslurry (B) thermisch und/oder mit aktinischer Strahlung härtbar sind.

16. Mischsystem nach einem der Ansprüche 13 bis 15, **dadurch gekennzeichnet, daß** der Pulverslurryklarlack (A), die farb- und/oder effektgebende Pulverslurry (A) und die farb- und/oder effektgebende Pulverslurry (B) bis auf die farb- und/oder effektgebenden Pigmente die gleichen Bestandteile, insbesondere die gleichen Bindemittel, enthalten.

17. Mischsystem nach einem der Ansprüche 13 bis 16, **dadurch gekennzeichnet, daß** es noch mindestens einen Pulverslurryklarlack (A) umfaßt.

18. Modulsystem zur Herstellung von farb- und/oder effektgebenden Pulverslurries und/oder zur nachträglichen Einstellung ihrer Farbtöne und/oder ihrer optischen Effekte, enthaltend
(I) einen Effektmodul, enthaltend eine farb- und/oder effektgebende Pulverslurry (A) und
(II) mindestens einen weiteren Effektmodul, enthaltend eine farb- und/oder effektgebende Pulverslurry (B), die einen anderen Farbton und/oder optischen Effekt als die Pulverslurry (A) aufweist, sowie
(III) ein Farbmischformel-System (C).

19. Modulsystem nach Anspruch 18, **dadurch gekennzeichnet, daß** es sich bei den optischen Effekten um Metallic-Effekte und/oder dichroitische optische Effekte handelt.

20. Modulsystem nach Anspruch 18 oder 19, **dadurch gekennzeichnet, daß** der Pulverslurryklarlack (A), die farb- und/oder effektgebende Pulverslurry (A) und die farb- und/oder effektgebende Pulverslurry (B) thermisch und/oder mit aktinischer Strahlung härtbar sind.

21. Modulsystem nach einem der Ansprüche 18 bis 20, **dadurch gekennzeichnet, daß** der Pulverslurryklarlack (A), die farb- und/oder effektgebende Pulverslurry (A) und die farb- und/oder effektgebende Pulverslurry (B) bis auf die farb- und/oder effektgebenden Pigmente die gleichen Bestandteile, insbesondere die gleichen Bindemittel, enthalten.

22. Modulsystem nach einem der Ansprüche 18 bis 21, **dadurch gekennzeichnet, daß** es noch mindestens einen Klarlackmodul (IV), enthaltend einen Pulverslurryklarlack (A), umfaßt.

23. Verwendung der Pulverslurries gemäß einem der Ansprüche 1 bis 4, der nach dem Verfahren gemäß einem der Ansprüche 5 bis 8 hergestellten Pulverslurries, der nach dem Verfahren gemäß einem der Ansprüche 9 bis 12 nachträglich eingestellten Pulverslurries, der mit Hilfe des Mischsystems gemäß einem der Ansprüche 13 bis 17 hergestellten Pulverslurnes und/oder der mit Hilfe des Modulsystems gemäß einem der Ansprüche 18 bis 22 hergestellten Pulverslurries für die Automobilerstlackierung, die Automobilreparaturlackierung, die Lackierung von Bauwerken im Innen- und Außenbereich, die Lackierung von Türen, Fenstern und Möbeln sowie die industrielle Lackierung, inklusive Coil Coating, Container Coating und die Imprägnierung und/oder Beschichtung elektrotechnischer Bauteile.

## Claims

1. Colour and/or effect powder slurries preparable by mixing
(A) a powder slurry clearcoat material with
(B) at least one colour and/or effect powder slurry,
or alternatively
(A) a colour and/or effect powder slurry with
(B) at least one colour and/or effect powder slurry having a different shade and/or optical effect from the powder slurry (A).

2. Powder slurries according to Claim 1, **characterized in that** the optical effects comprise metallic effects and/or dichroic optical effects.

3. Powder slurries according to Claim 1 or 2, **characterized in that** the powder slurry clearcoat material (A), the colour and/or effect powder slurry (A) and the colour and/or effect powder slurry (B) are curable thermally and/or with actinic radiation.

4. Powder slurries according to any of Claims 1 to 3, **characterized in that** the powder slurry clearcoat material (A), the colour and/or effect powder slurry (A) and the colour and/or effect powder slurry (B) comprise the same constituents except for the colour and/or effect pigments; especially the same binders.

5. Process for preparing colour and/or effect powder slurries by mixing powder slurries with colour and/or effect pigments, **characterized in that**
(A) a powder slurry clearcoat material is mixed with
(B) at least one colour and/or effect powder slurry,
or alternatively
(A) a colour and/or effect powder slurry is mixed with
(B) at least one colour and/or effect powder slurry having a different shade and/or optical effect from the powder slurry (A).

6. Process according to Claim 5, **characterized in that** the optical effects comprise metallic effects and/or dichroic optical effects.

7. Process according to Claim 5 or 6, **characterized in that** the powder slurry clearcoat material (A), the colour and/or effect powder slurry (A) and the colour and/or effect powder slurry (B) are curable thermally and/or with actinic radiation.

8. Process according to any of Claims 5 to 7, **characterized in that** the powder slurry clearcoat material (A), the colour and/or effect powder slurry (A) and the colour and/or effect powder slurry (B) comprise the same constituents except for the colour and/or effect pigments; especially the same binders.

9. Process for the subsequent adjustment of the shades and/or the optical effects of colour and/or effect powder slurries, **characterized in that**
(A) a colour and/or effect powder slurry is mixed with
(B) at least one colour and/or effect powder slurry having a different shade and/or optical effect from the powder slurry (A).

10. Process according to Claim 9, **characterized in that** the optical effects comprise metallic effects and/or dichroic optical effects.

11. Process according to Claim 9 or 10, **characterized in that** the powder slurry clearcoat material (A), the colour and/or effect powder slurry (A) and the colour and/or effect powder slurry (B) are curable thermally and/or with actinic radiation.

12. Process according to any of Claims 9 to 11, **characterized in that** the powder slurry clearcoat material (A), the colour and/or effect powder slurry (A) and the colour and/or effect powder slurry (B) comprise the same constituents except for the colour and/or effect pigments; especially the same binders.

13. Mixer system for preparing colour and/or effect powder slurries and/or for subsequently adjusting their shades and/or their optical effects, comprising
(A) a colour and/or effect powder slurry and
(B) at least one further colour and/or effect powder slurry having a different shade and/or optical effect from the powder slurry (A).

14. Mixer system according to Claim 13, **characterized in that** the optical effects comprise metallic effects and/or dichroic optical effects.

15. Mixer system according to Claim 13 or 14, **characterized in that** the powder slurry clearcoat material (A), the colour and/or effect powder slurry (A) and the colour and/or effect powder slurry (B) are curable thermally and/or with actinic radiation.

16. Mixer system according to any of Claims 13 to 15, **characterized in that** the powder slurry clearcoat material (A), the colour and/or effect powder slurry (A) and the colour and/or effect powder slurry (B) comprise the same constituents except for the colour and/or effect pigments; especially the same binders.

17. Mixer system according to any of Claims 13 to 16, **characterized in that** it further comprises at least one powder slurry clearcoat material (A).

18. Modular system for preparing colour and/or effect powder slurries and/or for subsequently adjusting their shades and/or their optical effects, comprising
(I) an effect module comprising a colour and/or effect powder slurry (A), and
(II) at least one further effect module, comprising a colour and/or effect powder slurry (B) having a different shade and/or optical effect than the powder slurry (A), and also
(III) a paint mixing formula system (C).

19. Modular system according to Claim 18, **characterized in that** the optical effects comprise metallic effects and/or dichroic optical effects.

20. Modular system according to Claim 18 or 19, **characterized in that** the powder slurry clearcoat material (A), the colour and/or effect powder slurry (A) and the colour and/or effect powder slurry (B) are curable thermally and/or with actinic radiation.

21. Modular system according to any of Claims 18 to 20, **characterized in that** the powder slurry clearcoat material (A), the colour and/or effect powder slurry (A) and the colour and/or effect powder slurry (B) comprise the same constituents except for the colour and/or effect pigments; especially the same binders.

22. Modular system according to any of Claims 18 to 21, **characterized in that** it further comprises at least one clearcoat module (IV) comprising a powder slurry clearcoat material (A).

23. Use of the powder slurries according to any of Claims 1 to 4, of the powder slurries prepared by the process according to any of Claims 5 to 8, of the powder slurries subsequently adjusted by the process according to any of Claims 9 to 12, of the powder slurries prepared with the aid of the mixer system according to any of Claims 13 to 17 and/or of the powder slurries prepared with the aid of the modular system according to any of Claims 18 to 22 for automotive OEM finishing, automotive refinishing, the interior and exterior coating of constructions, the coating of doors, windows and furniture, and industrial coating, including coil coating, container coating and the impregnation and/or coating of electrical components.

## Revendications

1. Suspensions de poudre, colorantes et/ou à effets décoratifs, pouvant être préparées par mélange
(A) d'un vernis transparent à base d'une suspension de poudre, avec
(B) au moins une suspension de poudre colorante et/ou à effets décoratifs,
ou bien encore
(A) d'une suspension de poudre colorante et/ou à effets décoratifs, avec
(B) au moins une suspension de poudre colorante et/ou à effets décoratifs, qui présente une nuance et/ou un effet optique différents de ceux de la suspension de poudre (A).

2. Suspensions de poudre selon la revendication 1, **caractérisées en ce que**, pour ce qui concerne les effets optiques, il s'agit d'effets métallisés et/ou d'effets optiques dichroïques.

3. Suspensions de poudre selon la revendication 1 ou 2, **caractérisées en ce que** le vernis transparent à base d'une suspension de poudre (A), la suspension de poudre colorante et/ou à effets décoratifs (A), et la suspension de poudre colorante et/ou à effets décoratifs (B), sont durcissables par voie thermique et/ou à l'aide d'un rayonnement actinique.

4. Suspensions de poudre selon l'une des revendications 1 à 3, **caractérisées en ce que** le vernis transparent à base d'une suspension de poudre (A), la suspension de poudre colorante et/ou à effets décoratifs (A) et la suspension de poudre colorante et/ou à effets décoratifs (B) contiennent, sauf des pigments colorants et/ou à effets décoratifs, les mêmes constituants, en particulier les mêmes liants.

5. Procédé de préparation de suspensions de poudre colorantes et/ou à effets décoratifs, par mélange de suspensions de poudre avec des pigments colorants et/ou à effets décoratifs, **caractérisé en ce qu'**on mélange
(A) un vernis transparent à base d'une suspension de poudre avec
(B) au moins une suspension de poudre colorante et/ou à effets décoratifs,
ou bien encore
(A) une suspension de poudre colorante et/ou à effets décoratifs avec
(B) au moins une suspension de poudre colorante et/ou à effets décoratifs, qui présente une nuance et/ou un effet optique différents de ceux de la suspension de poudre (A).

6. Procédé selon la revendication 5, **caractérisé en ce que**, pour ce qui concerne les effets optiques, il s'agit d'effets métallisés et/ou d'effets optiques dichroïques.

7. Procédé selon la revendication 5 ou 6, **caractérisé en ce que** le vernis transparent à base d'une suspension de poudre (A), la suspension de poudre colorante et/ou à effets décoratifs (A), et la suspension de poudre colorante et/ou à effets décoratifs (B), sont durcissables par voie thermique et/ou à l'aide d'un rayonnement actinique.

8. Procédé selon l'une des revendications 5 à 7, **caractérisé en ce que** le vernis transparent à base d'une suspension de poudre (A), la suspension de poudre colorante et/ou à effets décoratifs (A) et la suspension de poudre colorante et/ou à effets décoratifs (B) contiennent, sauf des pigments colorants et/ou à effets décoratifs, les mêmes constituants, en particulier les mêmes liants.

9. Procédé pour l'ajustement ultérieur des nuances et/ou des effets optiques de suspensions de poudre colorantes et/ou à effets décoratifs, **caractérisé en ce qu'**on mélange
(A) une suspension de poudre colorante et/ou à effets décoratifs avec
(B) au moins une suspension de poudre colorante et/ou à effets décoratifs, qui présente une nuance et/ou un effet optique différents de ceux de la suspension de poudre (A).

10. Procédé selon la revendication 9, **caractérisé en ce que**, pour ce qui concerne les effets optiques, il s'agit d'effets métallisés et/ou d'effets optiques dichroïques.

11. Procédé selon la revendication 9 ou 10, **caractérisé en ce que** le vernis transparent à base d'une suspension de poudre (A), la suspension de poudre colorante et/ou à effets décoratifs (A), et la suspension de poudre colorante et/ou à effets décoratifs (B), sont durcissables par voie thermique et/ou à l'aide d'un rayonnement actinique.

12. Procédé selon l'une des revendications 9 à 11, **caractérisé en ce que** le vernis transparent à base d'une suspension de poudre (A), la suspension de poudre colorante et/ou à effets décoratifs (A) et la suspension de poudre colorante et/ou à effets décoratifs (B) contiennent, sauf des pigments colorants et/ou à effets décoratifs, les mêmes constituants, en particulier les mêmes liants.

13. Système de mélange pour préparer des suspensions de poudre colorantes et/ou à effets décoratifs et/ou pour l'ajustement ultérieur de leurs nuances et/ou de leurs effets optiques, contenant
(A) une suspension de poudre colorante et/ou à effets décoratifs, et
(B) au moins une autre suspension de poudre colorante et/ou à effets décoratifs, qui présente une nuance et/ou un effet optique différents de ceux de la suspension de poudre (A).

14. Système de mélange selon la revendication 13, **caractérisé en ce que**, pour ce qui concerne les effets optiques, il s'agit d'effets métallisés et/ou d'effets optiques dichroïques.

15. Système de mélange selon la revendication 13 ou 14, **caractérisé en ce que** le vernis transparent à base d'une suspension de poudre (A), la suspension de poudre colorante et/ou à effets décoratifs (A), et la suspension de poudre colorante et/ou à effets décoratifs (B), sont durcissables par voie thermique et/ou à l'aide d'un rayonnement actinique.

16. Système de mélange selon l'une des revendications 13 à 15, **caractérisé en ce que** le vernis transparent à base d'une suspension de poudre (A), la suspension de poudre colorante et/ou à effets décoratifs (A) et la suspension de poudre colorante et/ou à effets décoratifs (B) contiennent, sauf des pigments colorants et/ou à effets décoratifs, les mêmes constituants, en particulier les mêmes liants.

17. Système de mélange selon l'une des revendications 13 à 16, **caractérisé en ce qu'**il comprend encore au moins un vernis transparent à base d'une suspension de poudre (A).

18. Système modulaire pour préparer des suspensions de poudre colorantes et/ou à effets décoratifs et/ou pour l'ajustement ultérieur de leurs nuances et/ou de leurs effets optiques, contenant
(I) un module à effets décoratifs, contenant une suspension de poudre colorante et/ou à effets décoratifs (A), et
(II) au moins un autre module à effets décoratifs, contenant une suspension de poudre colorante et/ou à effets décoratifs (B), qui présente une nuance et/ou un effet optique différents de ceux de la suspension de poudre (A), ainsi que
(III) un système de mélange de colorants (C).

19. Système modulaire selon la revendication 18, **caractérisé en ce que**, pour ce qui concerne les effets optiques, il s'agit d'effets métallisés et/ou d'effets optiques dichroïques.

20. Système modulaire selon la revendication 18 ou 19, **caractérisé en ce que** le vernis transparent à base d'une suspension de poudre (A), la suspension de poudre colorante et/ou à effets décoratifs (A) et la suspension de poudre colorante et/ou à effets décoratifs (B), sont durcissables par voie thermique et/ou à l'aide d'un rayonnement actinique.

21. Système modulaire selon l'une des revendications 18 à 20, **caractérisé en ce que** le vernis transparent à base d'une suspension de poudre (A), la suspension de poudre colorante et/ou à effets décoratifs (A) et la suspension de poudre colorante et/ou à effets décoratifs (B) contiennent, sauf des pigments colorants et/ou à effets décoratifs, les mêmes constituants, en particulier les mêmes liants.

22. Système modulaire selon l'une des revendications 18 à 21, **caractérisé en ce qu'**il comprend encore au moins un module de vernis transparent (IV) contenant un vernis transparent à base d'une suspension de poudre (A).

23. Utilisation des suspensions de poudre selon l'une des revendications 1 à 4, des suspensions de poudre préparées par le procédé selon l'une des revendications 5 à 8, des suspensions de poudres ajustées ultérieurement par le procédé selon l'une des revendications 9 à 12, des suspensions de poudre préparées à l'aide du système de mélange selon l'une des revendications 13 à 17 et/ou des suspensions de poudre préparées à l'aide du système modulaire selon l'une des revendications 18 à 22, pour le laquage en première monte des carrosseries automobiles, pour la peinture de réparation des carrosseries automobiles, pour le laquage des ouvrages de construction en intérieur et en extérieur, pour le laquage des portes, des fenêtres et des meubles, ainsi que pour le laquage industriel, y compris le laquage en bande, le laquage de récipients, et l'imprégnation et/ou le revêtement des composants électrotechniques.
